(19) Europäisches Patentamt / European Patent Office / Office européen des brevets

(11) **EP 3 236 149 A1**

(12) **EUROPEAN PATENT APPLICATION**
published in accordance with Art. 153(4) EPC

(43) Date of publication:
**25.10.2017 Bulletin 2017/43**

(21) Application number: **15867195.8**

(22) Date of filing: **16.11.2015**

(51) Int Cl.:
*F22B 1/02* (2006.01)        *F28F 1/00* (2006.01)

(86) International application number:
**PCT/RU2015/000786**

(87) International publication number:
**WO 2016/093737 (16.06.2016 Gazette 2016/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **12.12.2014 RU 2014150429**

(71) Applicant: **Joint Stock Company "Experimental And Design Organisation "Gidropress" Awarded The Order of The Red Banner of Labour And Czsr Order of Labour Podolsk, Moskovskaya obl. 142102 (RU)**

(72) Inventors:
• **LAKHOV, Dmitriy Aleksandrovich**
  **Podolsk**
  **Moskovskaya obl. 142100 (RU)**
• **SAFRONOV, Alexey Vladimirovich**
  **Podolsk**
  **Moskovskaya obl. 142100 (RU)**

(74) Representative: **Friese Goeden Patentanwälte PartGmbB**
**Widenmayerstraße 49**
**80538 München (DE)**

(54) **STEAM GENERATOR WITH A HORIZONTAL BUNDLE OF HEAT EXCHANGE TUBES AND METHOD FOR ASSEMBLING SAME**

(57)     The invention relates to steam generators for VVER nuclear power plants. We claim a steam generator with a horizontal heat-exchange tube bundle comprising a welded cylinder vessel manufactured of steel shells and equipped with at least one feed water supply connection pipe and one steam removal connection pipe, and two elliptical bottoms, vessel internals, inlet and outlet headers connected to the heat-exchange tube bundle forming a heat-exchange surface of the steam generator, wherein inner diameter dvess of the steam generator vessel is selected based on the following relations:

$$0.148{\cdot}D + 0.637{\cdot}\sqrt{0.054{\cdot}D^2 + 3.142{\cdot}\frac{N_{tb}{\cdot}S_h{\cdot}S_v}{k}} \leq dvess \leq 1.827{\cdot}H,$$

where:
dvess is the inner diameter of the steam generator vessel, mm,
D is the rated steam generator capacity, t/h,
Ntb is the number of heat-exchange tubes in a bundle located in the vessel, pcs.,
Sv, Sh is the spacing between heat-exchange tubes in vertical and horizontal rows of heat-exchange bundle, respectively, mm,
k is the arrangement identifier of heat-exchange tubes in a bundle (k=1 for in-line arrangement and k=2 for staggered arrangement),
H is the steam generator vessel tube filling height,
The steam generator vessel is filled with heat-exchange bundle tubes from the bottom upwards to the height of three quarters of its inner diameter or less, the remaining space in the top part of steam generator vessel is left for steam drying.
    The technical result is creation of a steam generator with a decreased specific amount of metal per structure wherein

EP 3 236 149 A1

the generated steam is dried in one with the heat-exchange surface.

**FIG. 2**

**Description**

This invention relates to electric power industry, and more particularly to horizontal steam generators for nuclear power plants with a water-water energetic reactor (VVER).

Horizontal steam generators are widely used in the field of electric power generation that are not designed for nuclear industry application, but have a number of significant features consistent with those of the steam generators applied at nuclear power plants. Such is, for instance, the steam generator described in application for European patent EP1927809, IPC: F22B1/02 issued on 6/4/2008. The steam generator has a drum-shaped pressure vessel. The vessel longitudinal axis is horizontal or generally horizontal. The vessel accommodates hollow heat-exchange tubes grouped into sections and arranged mostly in parallel to one another, and secured in a supporting frame. Similar solutions are described in applications for Japanese patent JPH06300201, IPC: F22B1/16, issued on 10/28/1994 and JPH10141603, IPC: F22B1/18, issued on 5/29/1998, and in Chinese utility model patent CN203384952, IPC: F22B1/16 issued on 1/8/2014. The specified structures use a vertical tube sheet to close the heat-exchange tubes, the manufacture of such tube sheet being associated with a high specific amount of metal per structure and a complicated process to ensure leak tightness of joints during embedding of heat-exchange tubes in the tube sheet. Operation of a steam generator with a tube sheet may lead to accumulation of slurry on its surface, which can activate corrosion processes. Thermal output and steam capacity values of the said steam generators are below the requirements to steam generators for nuclear power plants.

The claimed invention relates to generally horizontal steam generators for nuclear power plants (the "steam generator"), for example, to steam generators as described in International application WO9320386 (issued on 10/14/1993, IPC F22B1/02) and International application WO9320385 (issued on 10/14/1993, IPC F22B1/02), and does not relate to vertical steam generators.

The said known horizontal steam generators for nuclear power plants do not have tube sheets in their design. Instead, two vertical cylinder headers are included in the horizontal steam generator vessel, namely, an inlet header and an outlet header of the primary circuit coolant connected to a horizontal heat-exchange tube bundle. Horizontally arranged heat-exchange tubes are mounted in the vertical cylinder surface of the said headers. Manufacturing process of the primary circuit coolant cylinder headers requires a lower specific amount of metal per structure than that of a tube sheet.

The closest analog of the claimed invention is the steam generator disclosed in patent RU30928 (issued on 7/10/2003, IPC F22B1/02). This steam generator comprises a vessel, inlet and outlet headers with a horizontal in-line heat-exchange tube bundle connected to the same and equipped with spacing devices and divided into banks with vertical intertubular tunnels between them. Horizontal heat-exchange tubes are installed at a horizontal and vertical relative spacing of $(1.44 \div 1.55) \cdot d$ and $(1.35 \div 1.40) \cdot d$ respectively, where d is the heat-exchange tube diameter. This technical solution allows to select an optimal spacing for arrangement of heat-exchange tubes in a bundle, but does not maintain the steam generator overall dimensions, which are necessary and sufficient to increase the efficiency of heat exchange between the primary and secondary circuit coolants within the steam generator volume.

At the same time, on the one hand, the increased steam generator vessel length or diameter allows to increase the heat-exchange surface area, however, it leads to a number of disadvantages:

- difficult transportation of the steam generator,
- difficulties may arise when installing the steam generator on supports,
- increased length of heat-exchange tubes increases the complexity of their manufacture,
- increased specific amount of metal of the vessel and its internals,
- a steam generator may not fit in the boxes of a reactor plant building, leading to difficulties during the power plant construction and steam generator assembly.

The existing models of horizontal steam generators for nuclear power plants already have a vessel diameter exceeding the limit value acceptable for rail road transportation of steam generators. Further increase of the vessel diameter will make rail road transportation of steam generators impossible, which it is deemed unreasonable as water transportation means are less available.

The closest analog of the proposed method of horizontal steam generator assembly is the method described in book "Steam Generator Units of Nuclear Power Plants" by N. G. Rassokhin, Moscow, Energatomizdat, 1987, pp. 65-68. The said method requires manufacturing a steam generator welded cylinder steel vessel of forged shells, two pressed elliptical bottoms, an inlet header and an outlet header of the primary circuit coolant, feed water and chemical reagent headers, and other vessel internals, as well as a bundle of U-shaped heat-exchange tubes. During steam generator assembly, firstly, shells are to be aligned horizontally and welded to each other, then vertical headers are to be installed in the vessel and secured by welding, then supports for a tube bundle are to be installed, a heat-exchange tube bundle is to be formed, other vessel internals are to be mounted and, finally, the elliptical bottoms are to be welded to the vessel. Due to large dimensions and weight of the steam generator vessel, the horizontal assembly and welding of the forged steel shells are rather labor-consuming and non-processable.

The purpose of the invention is to create a steam generator complying with the reliability, ease of manufacturing requirements with an increased steam generation capacity without significant increase of the main overall dimensions.

The technical result is a decreased specific amount of metal per structure of the steam generator vessel while drying the generated steam in the same vessel with a heat-exchange surface.

For the stated purpose, we claim a steam generator with a horizontal heat-exchange tube bundle comprising a welded cylinder vessel manufactured of steel shells and equipped with at least one feed water supply connection pipe and one steam removal connection pipe, and two elliptical bottoms, vessel internals, inlet and outlet headers connected to the heat-exchange tube bundle forming a heat-exchange surface of the steam generator, where inner diameter dvess of the steam generator vessel is selected based on the following relations:

$$0.148{\cdot}D + 0.637{\cdot}\sqrt{0.054{\cdot}D^2 + 3.142{\cdot}\frac{N_{tb}{\cdot}S_h{\cdot}S_v}{k}} \leq dvess \leq 1.827{\cdot}H,$$

where:

dvess is the inner diameter of the steam generator vessel, mm,
D is the rated steam generator capacity, t/h,
Ntb is the number of heat-exchange tubes in a bundle located in the vessel, pcs.,
Sv, Sh is the spacing between heat-exchange tubes in vertical and horizontal rows of heat-exchange bundle, respectively, mm,
k is the arrangement identifier of heat-exchange tubes in a bundle (k=1 for in-line arrangement and k=2 for staggered arrangement),
H is the steam generator vessel tube filling height.

The steam generator vessel is filled with heat-exchange bundle tubes from the bottom upwards to the height of three quarters of its inner diameter or less, the remaining space in the top part of steam generator vessel is left for steam drying. H≤3/4 dvess.

The tubes in steam generator heat-exchange bundles are grouped in banks separated by 100 to 250 mm-wide vertical intertubular tunnels serving to improve circulation and arrange supporting elements for fastening and spacing of tubes.

The steam generator heat-exchange tubes bundle is filled with heat-exchange tubes from bottom upwards continuously with uniform vertical gaps between adjacent tubes not exceeding the vertical spacing of tubes in the bundle.

The steam generator includes at least the following internals: a feed water supply and distribution device located above the heat-exchange tube bundle, an emergency feed water supply and distribution device located in the steam space, device for chemical reagent supply during steam generator flushing, a submerged perforated sheet with variable perforation and an overhead perforated sheet.

The second object of the claimed invention is assembly method for steam generator vessel with a horizontal heat-exchange tube bundle including manufacturing of steel shells with inner diameter dvess., assembly and welding of shells in order to form a cylinder vessel, equipment of the vessel with at least a feed water supply connection pipe and a steam removal connection pipe, inlet and outlet headers, connection of the same with a heat-exchange tube bundle, arrangement of vessel internals, installation of two elliptical bottoms on the cylinder vessel ends, followed by their welding to the vessel. Vessel assembly is performed by aligning the shells, for example, two thicker shells are aligned first forming the central part of the vessel and welded together. Then, two thinner shells are aligned and welded with the vessel central part on both sides. Inner diameter dvess of the vessel is chosen based on the following ratios:

$$0.148{\cdot}D + 0.637{\cdot}\sqrt{0.054{\cdot}D^2 + 3.142{\cdot}\frac{N_{tb}{\cdot}S_h{\cdot}S_v}{k}} \leq dvess \leq 1.827{\cdot}H,$$

where:

dvess is the inner diameter of the steam generator vessel, mm,
D is the rated steam generator capacity, t/h,
Ntb is the number of heat-exchange tubes in a bundle located in the vessel, pcs.,
Sv, Sh is the spacing between heat-exchange tubes in vertical and horizontal rows of heat-exchange bundle, respectively, mm,

k is the arrangement identifier of heat-exchange tubes in a bundle (k=1 for in-line arrangement and k=2 for staggered arrangement),

H is the steam generator vessel tube filling height,

The steam generator vessel is filled with heat-exchange bundle tubes from the bottom upwards to the height of three quarters of its inner diameter or less, the remaining space in the top part of steam generator vessel is left for steam drying.

In the preferable option, the steam generator cylinder vessel is assembled from three forged shells joined by weld seams.

As an alternative option, the steam generator cylinder vessel can be assembled from four forged shells joined by weld seams.

Elliptical bottoms of the steam generator vessel are pressed.

Materials for the steam generator vessel are high-strength pearlite grade steels, including steel 10GN2MFA.

It is preferable that the steam generator vessel has its inner diameter of maximum 4200 mm in order to facilitate rail road transportation issues.

Heat-exchange tubes are formed into U-shaped coils by bending in stages and are arranged in a bundle. Tubes are installed with hydraulic slope towards primary circuit coolant headers in a heat-exchange bundle in order to provide complete draining of heat-exchange tubes.

After welding of the shells, weld seams on the steam generator cylinder vessel are subjected to mechanical and heat treatment and covered with a protective coating.

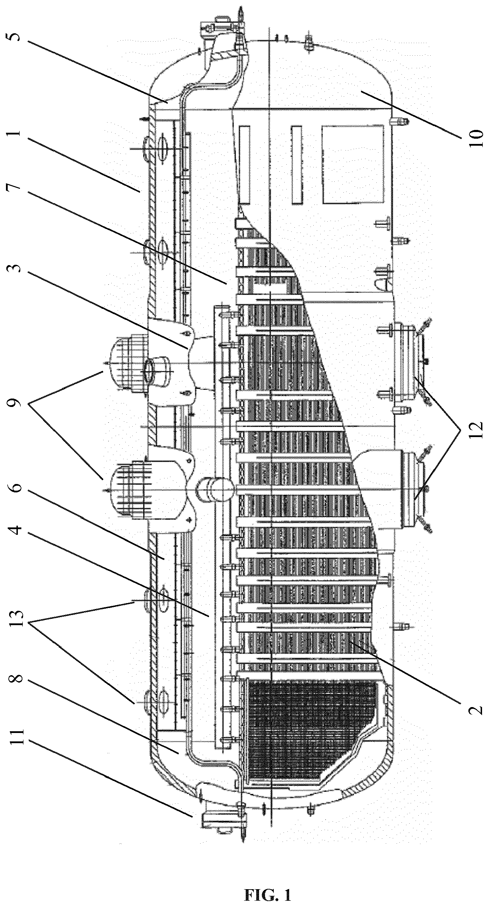

The embodiment of the invention related to steam generator with a horizontal heat-exchange tube bundle and its assembly method is further detailed with references to Figures 1-3.

Fig. 1 shows the general view of the steam generator vessel.
Fig. 2 shows the sectional view of the steam generator from the elliptical bottom.
Fig. 3 shows the heat-exchange tubes with spacing elements.

A steam generator for VVER nuclear power plants is a horizontal single-vessel heat-exchange unit with an immersed heat-exchange surface comprising the following components as shown in the enclosed figures: a vessel 1, a heat-exchange tube bundle 2 (also referred to as tube bundle, heat-exchange bundle), inlet and outlet headers 3 of the primary circuit coolant, a feed water supply and distribution device 4, an emergency feed water supply and distribution device 5, an overhead perforated sheet 6, a submerged perforated sheet 7, a chemical reagent supply device 8.

The vessel (1) determines the main dimensions of the steam generator, it accommodates inlet and outlet headers (3) of the primary circuit, a heat-exchange surface in the form of heat-exchange tube bundle (2) and vessel internals.

The vessel 1 is a horizontally elongated welded cylinder container with elliptical bottoms 10 with manholes 11 for access to the secondary circuit volume positioned on them welded to its both ends.

The vessel 1 also contains primary circuit coolant supply and removal connection pipes 12, steam removal connection pipes 13 feed water supply connection pipes 14 and other connection pipes and access manholes.

Headers 3 of the primary circuit coolant are thick-walled cylinders of varying diameters and thickness. They are made of high-strength pearlite grade steel, and their internal surfaces have a protective anti-corrosion build-up. The central cylinder part of headers 3 has perforations for fastening the ends of heat-exchange tubes 15. The upper part of headers 3 has a split for access inside through manholes 9 of the secondary circuit.

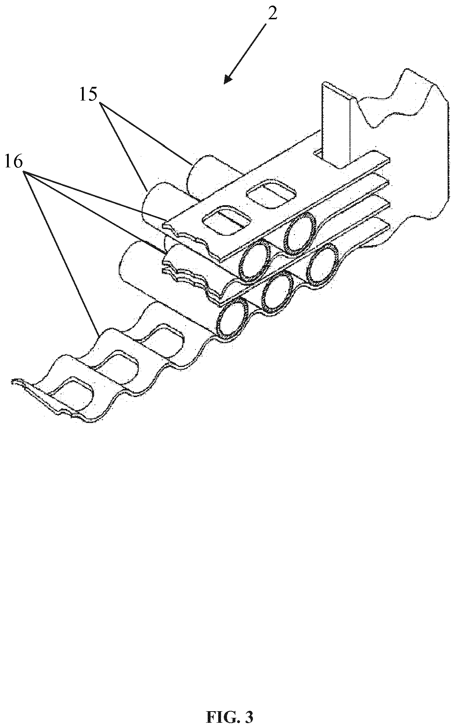

The heat-exchange surface of the steam generator is formed by heat-exchange tubes (15) made of austenitic stainless steel of the 08Cr18Ni10Ti grade. Heat-exchange tubes are formed into U-shaped coils arranged in bundle 2 and installed with a slope towards headers 3 in order to provide possibility of complete draining of heat-exchange tubes 15. Heat-exchange tubes 15 are fixed in headers 3 by counter welding of the ends with the internal surface of the headers 3. Hydraulic expansion of heat-exchange tubes 15 is performed over wall thickness of the headers 3 with mechanical curling near the external surface of the headers 3 until the of gap (split) between the headers 3 and the heat-exchange tubes 15 is closed. Heat-exchange tubes (15) are installed with a gap at certain intervals from one another (spaced in bundle (2)) using spacing elements (16), such as wave-shaped bands and flat plates (Fig. 3). This fixing structure allows the heat-exchange tubes 15 to move during thermal expansion.

Internal devices located in the vessel 1 include the following:

- feed water supply and distribution device 4 located above heat-exchange tube bundle 2. The said device 4 consists of pipelines and distributing pipes with orifices for feed water removal along their full length. The main material used for its manufacture is stainless steel,
- emergency feed water supply and distribution device 5 located in the steam space and consisting of a header and distributing pipes with orifices for feed water removal along their full length, The material used for its manufacture is stainless steel,

- device 8 for chemical reagent supply during steam generator flushing located in the steam space and consisting of a header with orifices for chemical reagent removal along its full length. The material used for its manufacture is stainless steel,

- overhead perforated sheet 6 located in the upper part of the steam generator and designed to decrease the header effect during steam removal from the steam generator. The material used for its manufacture is stainless steel,

- submerged perforated sheet 7 with alternating perforation located above the heat-exchange tube bundle 2 and designed to level the evaporation surface steam load. The main material used for its manufacture is stainless steel.

The operation principle of the steam generator structure is as follows. Coolant heated in reactor is supplied to the inlet or distributing header of the primary circuit coolant (one of headers 3). From the distributing header, it is fed to heat-exchange tubes (15), moves through them transferring the heat through the heat-exchange surface wall to the boiler water, and is collected in the outlet or collecting header of the primary circuit coolant (the other header (3)). The coolant is returned to the reactor from the collector header by a circulating pump. The steam generator vessel 1 is filled with boiler water to a certain level which is to be maintained during operation. Feed water is supplied to the steam generator by the feed water supply and distribution device 4. The feed water flowing out of it is mixed with the boiler water and heated to the saturation temperature. The heat transferred from the coolant is spent on boiler water evaporation and steam generation in the intertubular space of the steam generator. The generated steam is ascending to the separation part of the steam generator comprising a free volume, separation devices or a combination thereof. After passing the separation part of the steam generator, the steam has the design rated humidity. Then it is removed from the steam generator through steam removal devices comprising steam removal connection pipes 13 and overhead perforated sheets 6 installed in front of them. The steam generated by the steam generator is used in steam-power process cycle of electric power generation.

In the general case, an emergency feed water supply and distribution device (5), a chemical reagent supply device (8), an overhead perforated sheet (6), a submerged perforated sheet (7) are optional (non-critical) components of a steam generator. They are required to improve the steam generator operation reliability, durability, etc., and may either included or not in different horizontal steam generator structures. An emergency feed water supply and distribution device 5 is used to supply water to the steam generator if the main feed water line is damaged and during cooldown of the reactor plant through the secondary circuit in case of a design basis accident. A chemical reagent supply device 8 is used during regular flushing of the steam generation for removal of the accumulated depositions and corrosion products. This device is used to supply chemical reagents to the steam generator. A submerged perforated sheet 7 is used to level the steam load in the steam generator steam space. This is required to provide separation parameters of the steam generation and is only relevant for high-power steam generators. An overhead perforated sheet 6 is used to form an even profile of steam velocities in the steam generator steam space by creating resistance on its way, which is required to provide reliable steam separation in the steam generator.

A horizontal steam generator for a nuclear power plant is assembled as follows: First, a cylinder vessel (1) is manufactured, for example, from four forged steel shells. The steam generator vessel is assembled in a horizontal or vertical position. For instance, vertical assembly is performed by up-building of steel shells one upon another form bottom upwards by subsequent alignment of all four shells. The vertical assembly method increases the assembly accuracy while minimizing the costs. During the assembly, the aligned shells are connected by welding process tabs to the joint area in the quantity sufficient for rigid connection of the shells. In this case, to facilitate welding operations at height, auxiliary internal and external ring platforms for welders are created. Then, the assembled vessel is returned to the horizontal position using lifting cranes, the weld seam groves are checked, then, the next operation of automatic welding of ring seams is performed. After that, welded seams are subjected to heat treatment and protective coatings are built up on the internal surface of the steam generator vessel. Thermodiffusion coatings may be applied additionally afterwards.

To proceed with the next stage of steam generator assembly, one-piece or two-component pressed elliptical bottoms (11), a feed water supply and distribution device (4), steam removal connection pipes (13), inlet and outlet headers (3), heat-exchange tubes (15) with outer diameter dtb in quantity Ntb are manufactured. Then, the above devices are installed and fixed in the vessel (1), in particular, the headers (3), supports for the heat-exchange tube bundle (2) and other specified vessel internals are welded to the vessel (1). The elliptical bottoms 11 are installed and welded onto the vessel 1. Weld seams joining the steam generator vessel and the bottoms, are covered with build-up on the internal surface of the steam generator vessel.

The following devices may also be manufactured and installed in the vessel (1): an emergency feed water supply and distribution device (5), a chemical reagent supply device (8), an overhead perforated sheet (6), and a submerged perforated sheet (7). These elements are optional for the steam generator, however, as it was mentioned above, they are designed to improve steam generator operation.

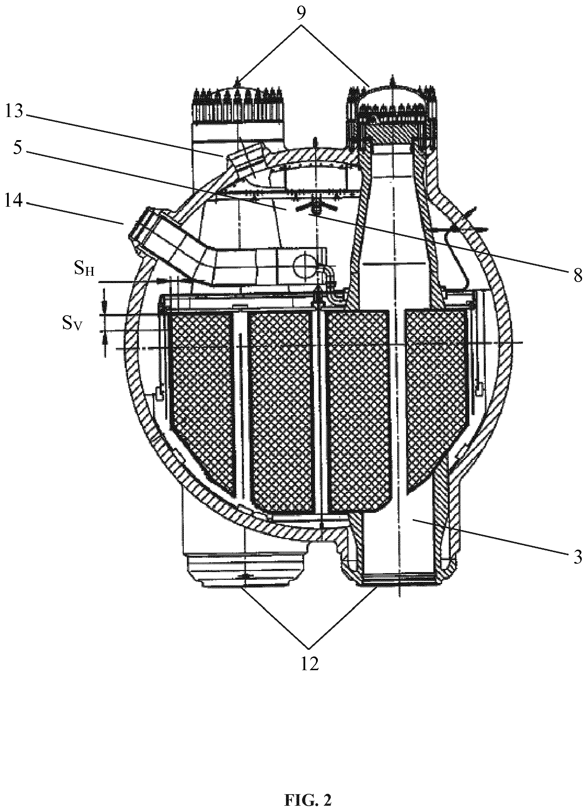

The steam generator vessel (1) is filled with heat-exchange bundle tubes (2) from the bottom upwards to the height of three quarters of the vessel inner diameter or less, the remaining space in the top part of steam generator vessel is left for steam drying. The heat-exchange bundle tubes are grouped in banks as shown in Fig. 2, that are separated by vertical intertubular tunnels with the width from 100 to 250 mm.

In particular, ideally, the steam generator vessel is filled with the heat-exchange bundle tubes from the bottom upwards to the height of three quarters of its inner diameter or less, but not lower than 150 to 400 mm above the horizontal axis of the steam generator vessel.

The heat-exchange tube bundle (2) is formed so that it is filled with heat-exchange tubes (15) continuously from bottom upwards. Spacing elements 16 ensure gaps in the heat-exchange tube bundle 2 that do not exceed the vertical spacing of heat-exchange tubes 15 in the bundle 2.

Example 1.

A steam generator is manufactures with the set steam generation capacity of 1470 t/h, its heat-exchange tubes have inner diameter dtb = 16 mm and wall thickness $\delta$ = 1.5 mm. A heat-exchange bundle contains 10,980 staggered heat-exchange tubes, k=2. Spacing between the heat-exchange tubes in the heat-exchange bundle vertical row is $S_v$ =38 mm. Spacing between the heat-exchange tubes in the heat-exchange bundle horizontal row is $S_h$ =23 mm, heat-exchange bundle filling height H is 2300 mm.

In accordance with the example, the steam generator vessel is manufactured as a welded cylinder vessel from four forged shells with two pressed elliptical bottoms connected to each end of the vessel. Internal diameter $d_{vess}$ of the steam generator vessel is chosen based on the following ratios:

$$d_{vess\ max} = 1.827 \cdot H = 4,202 \text{ mm.}$$

$$d_{vess\ min} = 0.148 \cdot D + 0.637 \cdot \sqrt{0.054 \cdot D^2 + 3.142 \cdot \frac{N_{tb} \cdot S_h \cdot S_v}{k}} = = 0.148 \cdot 1470 +$$

$$0.637 \cdot \sqrt{0.054 \cdot 1470^2 + 3.142 \cdot \frac{10,980 \cdot 23 \cdot 38}{2}} = 2700 \text{ mm.}$$

Manufacturing of a steam generator with diameter less than 2 700 mm with the set steam generation capacity is possible in principle, if a removable separator is included in its design. Then it is possible to reduce the size of the steam generator vessel and fill its volume with heat-exchange surface completely. A vessel with a 2700 mm diameter can accommodate up to 13,102 tubes of a 16 mm diameter with spacing between heat-exchange tubes $S_v$ = 38 mm, $S_h$ = 23 mm for staggered arrangement. However, considering that fastening and spacing elements for heat-exchange bundle tubes are to be placed in the steam generator, and that the full surface of the coolant headers cannot be used for tubing, it is practically impossible to manufacture a metal steam generator with the set steam generation capacity (with the set steam-exchange surface parameters) and a vessel diameter less than 2700 mm. The vessel of such steam generator has no space for steam drying.

Consequently, the said technical result is not achieved if the steam generator vessel diameter is less than the value meeting the following criterion:

$$d_{vess} \leq 0.148 \cdot D + 0.637 \cdot \sqrt{0.054 \cdot D^2 + 3.142 \cdot \frac{N_{tb} \cdot S_h \cdot S_v}{k}}$$

On the other hand, it is infeasible to manufacture a steam generator vessel with inner diameter exceeding 4202 mm as it will increase the specific amount of metal per structure, cause transportation difficulties, increase the steam generator box in the reactor building and the cost of capital construction without any improvement of reactor plant steam drying parameters.

The steam drying parameters of the steam generator, in their turn, depend on the value and configuration of steam space above the evaporation surface. In accordance with claimed invention, the heat-exchange bundle tubes covered by the boiler water, i.e. submerged under the evaporation surface, shall be grouped in banks with a height of three quarters of the inner diameter of the steam generator vessel or less (H≤3/4 dvess), the remaining space in the top part of steam generator vessel is left for steam drying. Under these conditions, suitable steam drying parameters are achieved.

However, if the height of the heat-exchange bundle tube banks exceeds ¾ dvess, for example, H=4/5 dvess, then the evaporation surface width will also be approximately 4/5 dvess, and separation section height will be 1/5 dvess. Thus, the steam generator separation section will have a shape of a confuser with a large convergence angle, and steam separation in the steam generator vessel will become impossible.

Example 2.

A high-power steam generator is manufactured. The SG steam generation capacity is set at 4000 t/h level. In order to create a heat-exchange surface, heat-exchange tubes with outer diameter 12 mm are used. The tubes are arranged with the minimum gap of 2 mm. The spacing between heat-exchange tubes in a bundle is Sv=Sh=14 mm. The tube arrangement as staggered (k=1).

The specific amount of metal per structure is decreased by selection of the steam generator vessel diameter within the range of minimum values sufficient for accommodation of the set number of heat-exchange tubes at the set spacing for the set arrangement, providing that steam is dried in the steam space located above the heat-exchange bundle.

The claimed invention allows us to select the minimum value for the steam generator vessel inner diameter using the following empiric relation:

$$D_{\text{vess min}} = 0.148 \cdot D + 0.637 \cdot \sqrt{0.054 \cdot D^2 + 3.142 \cdot \frac{N_{tb} \cdot S_h \cdot S_v}{k}} = = 0.148 \cdot 4000 +$$

$$0.637 \cdot \sqrt{0.054 \cdot 4000^2 + 3.142 \cdot \frac{Ntb \cdot 14 \cdot 14}{2}} = 592 + 0.637 \cdot \sqrt{864000 + 615.8 \cdot Ntb}.$$

Further, depending on the steam generator rated output, different numbers of heat-exchange tubes can be selected with the corresponding ranges of steam generator vessel diameters, according to the claimed invention.

In order to improve the heat exchanging conditions, the spacing between tubes in a tube bundle may be increased to 18 mm (Sv=Sh=18 mm). The data obtained from the above relation for the two options of heat-exchange tube spacing are shown in Table 1.

Comparison of values for the minimum SG vessel diameter specified in Table 1 shows that in order to place heat-exchange tubes in a bundle at a larger spacing, where Sv=Sh=18 mm, more space is required, which can be achieved by further increase of the vessel diameter leading to increased cost of metal for manufacture.

The empiric relation between the vessel diameter and the number of heat-exchange tubes in a bundle specified in the claimed invention allows to determine the minimum vessel diameter required to place the set number of tubes for the set arrangement and spacing, provided that the steam is dried in the steam space located above heat-exchange bundle. In this case the heat-exchange bundle tubes are laid in rows in tube banks inside the vessel. Heat-exchange tube banks have a height of three quarters of the steam generator vessel diameter or less and are covered with boiler water completely. The remaining space in the steam generator vessel is used for steam drying.

Steam drying in the steam space of the steam generator helps to decrease its specific amount of metal due to the absence of a removable steam drier vessel.

Table 1

| Number of heat-exchange tubes in the steam generator Tube Ø =12 mm, | Steam generator vessel diameter | |
|---|---|---|
| | Minimum value $d_{\text{vess min}}$ mm Sv=Sh=14 | Maximum value $d_{\text{vess max}}$ mm Sv=Sh=18 |
| 12,000 | 2422 | 2896 |
| 13,000 | 2489 | 2984 |
| 15,000 | 2617 | 3151 |
| 20,000 | 2905 | 3527 |
| 25,000 | 3161 | 3860 |
| 30,000 | 3393 | 4162 |

**Claims**

1. A steam generator with a horizontal heat-exchange tube bundle comprising a welded cylinder vessel manufactured of steel shells and equipped with at least one feed water supply connection pipe and one steam removal connection pipe, and two elliptical bottoms, vessel internals, inlet and outlet headers connected to the heat-exchange tube bundle forming a heat-exchange surface of the steam generator, wherein inner diameter dvess of the steam generator vessel is selected based on the following relations:

$$0.148{\cdot}D + 0.637{\cdot}\sqrt{0.054{\cdot}D^2 + 3.142{\cdot}\frac{N_{tb}{\cdot}S_h{\cdot}S_v}{k}} \leq dvess \leq 1.827{\cdot}H,$$

where:

dvess is the inner diameter of the steam generator vessel, mm,
D is the rated steam generator capacity, t/h,
Ntb is the number of heat-exchange tubes in a bundle located in the vessel, pcs.,
Sv, Sh is the spacing between heat-exchange tubes in vertical and horizontal rows of heat-exchange bundle, respectively, mm,
k is the arrangement identifier of heat-exchange tubes in a bundle (k=1 for in-line arrangement and k=2 for staggered arrangement),
H is the steam generator vessel tube filling height,

The steam generator vessel is filled with heat-exchange bundle tubes from the bottom upwards to the height of three quarters of its inner diameter or less, the remaining space in the top part of steam generator vessel is left for steam drying.

2. A steam generator according to claim 1, wherein the heat-exchange bundle tubes are grouped in banks separated by vertical intertubular tunnels with the width of 150 to 200 mm

3. A steam generator according to claim 1, wherein the heat-exchange tube bundle is filled with heat-exchange tubes from bottom upwards evenly with vertical gaps between adjacent tubes not exceeding the vertical spacing of tubes in the bundle.

4. A steam generator according to claim 1, wherein it includes at least the following internals: a feed water supply and distribution device located above the heat-exchange tube bundle, an emergency feed water supply and distribution device located in the steam space, device for chemical reagent supply during steam generator flushing, a submerged perforated sheet with variable perforation and an overhead perforated sheet.

5. An assembly method for steam generator vessel with a horizontal heat-exchange tube bundle including manufacturing of steel shells with inner diameter dvess., assembly and welding of shells in order to form a cylinder vessel, equipment of the vessel with at least a feed water supply connection pipe and a steam removal connection pipe, inlet and outlet headers, connection of the same with a heat-exchange tube bundle, arrangement of vessel internals, installation of two elliptical bottoms on the cylinder vessel ends, followed by their welding to the vessel, wherein inner diameter dvess of the vessel is chosen based on the following ratios:

$$0.148{\cdot}D + 0.637{\cdot}\sqrt{0.054{\cdot}D^2 + 3.142{\cdot}\frac{N_{tb}{\cdot}S_h{\cdot}S_v}{k}} \leq dvess \leq 1.827{\cdot}H,$$

where:

dvess is the inner diameter of the steam generator vessel, mm,
D is the rated steam generator capacity, t/h,
Ntb is the number of heat-exchange tubes in a bundle located in the vessel, pcs.,
Sv, Sh is the spacing between heat-exchange tubes in vertical and horizontal rows of heat-exchange bundle, respectively, mm,
k is the arrangement identifier of heat-exchange tubes in a bundle (k=1 for in-line arrangement and k=2 for staggered arrangement),
H is the steam generator vessel tube filling height,

The steam generator vessel is filled with heat-exchange bundle tubes from the bottom upwards to the height of three quarters of its inner diameter or less, the remaining space in the top part of steam generator vessel is left for steam drying.

6. A method according to claim 5, wherein the vessel is assembled vertically by subsequent alignment of shells from bottom upwards and their fastening by welding process tabs in the joints.

7. A method according to claim 6, wherein the cylinder vessel is assembled vertically from three forged shells connected by weld seams horizontally.

8. A method according to claim 5, wherein the cylinder vessel is assembled horizontally from three forged shells connected by weld seams.

9. A method according to claim 5, wherein the vessel elliptical bottoms are manufactured in one piece.

10. A method according to claim 5, wherein the vessel is made of high-strength pearlite grade steels, including steel 10GN2MFA.

11. A method according to claim 5, wherein the steam generator vessel inner diameter does not exceed 4202 mm.

12. A method according to claim 5, wherein the heat-exchange tubes formed into U-shaped coils and arranged in a bundle, where they are installed with hydraulic slope towards coolant headers in order to provide complete draining of heat-exchange tubes.

13. A method according to claim 5, wherein after the steam generator vessel is welded to the elliptical bottoms, the weld seams are covered with protective coating by build-up on the steam generator vessel internal surface.

FIG. 1

**FIG. 2**

**FIG. 3**

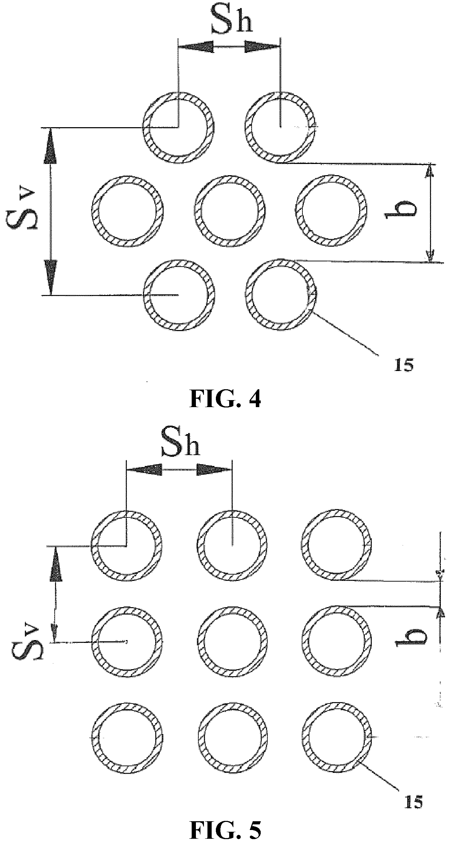

FIG. 4

FIG. 5

## INTERNATIONAL SEARCH REPORT

| | International application No. |
|---|---|
| | PCT/RU 2015/000786 |

**A. CLASSIFICATION OF SUBJECT MATTER**

F22B 1/02 (2006.01); F28F 1/00 (2006.01)

According to International Patent Classification (IPC) or to both national classification and IPC

**B. FIELDS SEARCHED**

Minimum documentation searched (classification system followed by classification symbols)

F22B 1/00-1/16, 37/00-37/22, F22D 1/00- 1/50, F28F1/00

Documentation searched other than minimum documentation to the extent that such documents are included in the fields searched

Electronic data base consulted during the international search (name of data base and, where practicable, search terms used)

PatSearch (RUPTO internal), USPTO, PAJ, Esp@cenet, DWPI, EAPATIS, PATENTSCOPE, Information Retrieval System of FIPS

**C. DOCUMENTS CONSIDERED TO BE RELEVANT**

| Category* | Citation of document, with indication, where appropriate, of the relevant passages | Relevant to claim No. |
|---|---|---|
| Y<br>A | RU 88773 U1 (OTKRYTOE AKTSIONERNOE OBSCHESTVO «VSEROSSIISKY NAUCHNO-ISSLEDOVATELSKY INSTITUT PO EKSPLUATATSII ATOMNYKH ELEKTROSTANTSII») 20.11.2009, fig.3, p.4, lines 26-53 | 1-11, 13<br>12 |
| Y | RU 30928 U1(OTKRYTOE AKTSIONERNOE OBSHCHESTVO «INZHINIRINGOVAIA KOMPANIIA ZIOMAR») 21.01.2003, fig.1-2, the claims | 1-11, 13 |
| Y | PNFE G-7-009-89 Oborudovanie i truboprovody atomnykh energeticheskikh ustanovok. Svarka i naplavka, osnovnye polozheniia, Federalnyi nadzor Rossii po iadernoi i radiatsionnoi bezopasnosti (GOSATOMNADZOR ROSSII) FEDERALNYE NORMY I PRAVILA V OBLASTI ISPOLZOVANIIA ATOMNOI ENERGII, [on-line] came into force as of 1 June 1990. | 6-11, 13 |

[X] Further documents are listed in the continuation of Box C.          [ ] See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 April 2016 (15.04.2016) | 21 April 2016 (21.04.2016) |

| Name and mailing address of the ISA/<br>RU | Authorized officer |
|---|---|
| Facsimile No. | Telephone No. |

Form PCT/ISA/210 (second sheet) (April 2005)

**INTERNATIONAL SEARCH REPORT**

| International application No. |
| --- |
| PCT/RU 2015/000786 |

C (Continuation).      DOCUMENTS CONSIDERED TO BE RELEVANT

| Category* | Citation of document, with indication, where appropriate, of the relevant passages | Relevant to claim No. |
| --- | --- | --- |
| Y | RU 2184997 C1 (OPYTNOE KONSTRUKTORSKOE BIURO «GIDROPRESS») 10.07.2002, fig.1, the claims | 4 |
| A | RU 2068149 C1 (OPYTNOE KONSTRUKTORSKOE BIURO «GIDROPRESS») 20.10.1996, fig.1, the claims | 1-13 |
| A | RU 2052710 C1 (OPYTNOE KONSTRUKTORSKOE BJURO «GIDROPRESS») 20.01.1996, fig.1-2, p.4 lines 23-29 | 1-13 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1927809 A
- JP H06300201 B
- JP H10141603 B
- CN 203384952
- WO 9320386 A
- WO 9320385 A
- RU 30928

**Non-patent literature cited in the description**

- Steam Generator Units of Nuclear Power Plants. **N. G. RASSOKHIN.** Energatomizdat. 1987, 65-68